# EUROPEAN PATENT SPECIFICATION

(11) **EP 1 067 807 B1**
(45) Date of publication and mention of the grant of the patent: **02.11.2005**
(21) Application number: 99112882.8
(22) Date of filing: 03.07.1999
(51) Int. Cl.: H04Q 3/66

(54) **Arrangement and method for load control in a telecommunications network**
Anordnung und Verfahren zur Laststeuerung in einem Telekommunikationsnetz
Dispositif et procédé pour la régulation de charge dans un réseau de télécommunications

(43) Date of publication of application: 10.01.2001
(73) Proprietor: TELEFONAKTIEBOLAGET LM ERICSSON (publ), 164 83 Stockholm (SE)
(72) Inventor: Jonsson, Kurt D., 123 43 Farsta (SE)
(74) Representative: Bergentall, Annika Maria

(56) References cited:
- EP-A- 0 696 147
- WO-A-97/06643
- WO-A-98/04078
- PHAM X H ET AL: "CONGESTION CONTROL FOR INTELLIGENT NETWORKS" INTERNATIONAL ZURICH SEMINAR ON DIGITAL COMMUNICATIONS. INTELLIGENT NETWORKS AND THEIR APPLICATIONS,XX,XX, page 375-389 XP000619898
- TSOLAS N ET AL: "PERFORMANCE AND OVERLOAD CONSIDERATIONS WHEN INTRODUCING IN INTO AN EXISTING NETWORK" INTERNATIONAL ZURICH SEMINAR ON DIGITAL COMMUNICATIONS. INTELLIGENT NETWORKS AND THEIR APPLICATIONS,XX,XX, page 407-414 XP000570865
- STACH J F: "GRAPH ANALYSIS AND RULE BASED PARADIGMS FOR THE IDENTIFICATION CONTAINMENT AND CLEARING OF SWITCH CONGESTION IN NON-HIERARCHICAL CIRCUIT SWITCHED NETWORKS" PROCEEDINGS OF THE NATIONAL COMMUNICATIONS FORUM, XP000253912
- CHEMOUIL P ET AL: "INTEGRATED NETWORK MANAGEMENT AND CONTROL" COMPUTER NETWORKS AND ISDN SYSTEMS,NL,NORTH HOLLAND PUBLISHING. AMSTERDAM, vol. 20, no. 1 / 05, page 143-153 XP000161279 ISSN: 0169-7552

## Description

### FIELD OF THE INVENTION

The present invention relates to controlling the flow between nodes in a telecommunications network. Particularly the invention relates to a system in which the flow in a number of nodes is controlled so as to avoid overloading of nodes and an arrangement for controlling the flow in a node. The invention also relates to a method of controlling the flow between nodes in a telecommunications network.

### STATE OF THE ART

When a first node, or a signalling entity, is signalling to a second node using a protocol on a signalling channel through sending request PDUs (Protocol Data Units) for call establishment/modification/release such requests are time supervised according to the specified protocol. The first node may for example reside in a switching node whereas the second node may reside either in another switching node or in some end user equipment. When the first node is signalling to the second node e.g. requesting set-up of connections too quickly, the second node runs a risk of becoming overloaded. The signalling channel in known arrangements may provide backpressure thus preventing the first node from sending PDUs to the second node. The first node, however, does not know that the second node actually makes use of such mechanism. Such a solution is also not satisfactory since call modification/release requests are stopped together with the call establishment requests.

If the second node gets overloaded, it can restart the signalling channel which means a loss of connections. If the second node is constantly overloaded for some time it may even crash which means that a forced release of all connections established over the signalling channel will be the result. This is particularly disadvantageous and it is even worse if the second node is a switching node, or if the signalling entity resides on a switching node. Then may, as a consequence also neighbouring nodes crash since they have to notify users about the occurrence, i.e. the crash of the second node which may produce a so called mass release. Then a chain reaction may result leading to serious problems. Thus, even if the first node comprises means for load regulation as far as incoming requests are concerned, which means that the first node is too busy, and requests are saved or stored for a later handling, this is not enough.

WO-A-98/04078 shows a flow control technique in which the so called "window method" is used. Queries are sent from an SSP (switching point) to a SCP (Central Control Point), the queries are counted, and if no response is received from SSP when the number of queries has reached a threshold value, no further queries are sent to SSP.

ITU-T Recommendation E.412 and ITU-T Recommendation Q.542 describe regulation of overload in the data flow or a flow control on specific, already established telecommunication connections. E.412 describes preventing traffic towards an overloaded node during a time interval: this is however not sufficient and moreover the solution is not straightforward.

### SUMMARY OF THE INVENTION

What is needed is therefore an arrangement and a method for controlling the flow, particularly detecting overload on a node as a whole, and to handle set-up of new connections etc. depending thereon. Particularly an arrangement is needed through which overloading of switching nodes or end user equipments can be avoided. Particularly an arrangement and a method respectively is needed through which overloading of nodes can be avoided as efficiently as possible and more particularly an arrangement is needed through which crashing of nodes can be avoided as efficiently as possible. More generally an arrangement is needed through which a load regulation can be provided for without requiring expensive and complicated logic for traffic analyzes etc.

Therefore an arrangement for controlling the flow in a node in a telecommunication system is provided. The node uses a specified protocol for signalling with neighbouring nodes and load controlling means are used to control the outgoing traffic. The load controlling means comprises means for controlling the sending of requests to neighbouring nodes, detection means for detecting whether a response to a request sent to a neighbouring node is received so as to meet some predefined timing requirements and in the absence of a response from a node which should be received so as to meet the given requirements, no requests relating to a new call establishment are allowed to be sent to such node for a given time period or before the node has been unblocked for such requests. In a more general implementation of the invention is not dealt with the procedure of how it is to be established that no response is received from a node but it only deals with detecting overload in a neighbouring node through using the absence of a response to a request as a criteria that the particular node is overloaded.

In a particular implementation the load controlling means comprises (a) timer(s) which is started when a request is sent out to a neighbouring node. Particularly already existing timers, as provided for through the time supervision of the concerned protocols are used, or even more particularly, the absence of a response when such timer expires, is used. The predetermined requirement consists in a given time interval within which a response should be received if the node is not overloaded or close to being overloaded. This is actually what already is provided for through the prescribed protocol time supervision, only according to the invention may this information be used and taken advantage of as described below. Particularly the load controlling means comprises or communicates with storing means for storing information about neighbouring nodes not having provided a response within the predetermined time interval, thus indicating that the neighbouring node is overloaded. Information about overloaded nodes is then maintained in said storing means for a given time period and during such time period no request relating to a new or other call establishment is sent to such neighbouring node but e.g. to another neighbouring node (if possible). Such neighbouring node or nodes are selected according to a given scheme or arbitrarily. However this can be done in any appropriate manner. If there is no alternative, the call establishment request (e.g. incoming from still another node) will be rejected, since the time a set-up may take is specified etc. In a particular implementation the storing means comprises a table. The table may for example be provided in a primary memory but also other ways of providing the storing means are of course possible; this merely relates to one advantageous implementation.

Particularly, when a node intends to send an establishment request to a neighbouring node, the controlling means are used to perform a check in the storing means to see if there is any information about the neighbouring node, e.g. if there has been any timeout lately, and if yes, another node may be selected, if possible, and if not, the request is sent to the intended neighbouring node. The time period (latency time during which the node is blocked for call set-ups) as referred to above may be about 1 second or similar. Of course also other alternatives are possible. A request generally relates to the setting up of a connection (a call set-up request), a call release request or the adding of a party (modification request). Advantageously the timer(s) is/are started for every kind of requests, or e.g. as prescribed for by the protocol, but only call establishment requests are stopped if there has been a timeout. Particularly the timers as prescribed by the used protocol(s) are taken advantage of, i.e. it is detected if one of them expires, which is an indication that there was no response from a receiving node and the latency time period then start to run; however, as soon as another timer expires, this is supervised and the first is ignored (on condition that it relates to requests sent to one and the same node). Advantageously a node comprising means for controlling the outgoing traffic as discussed above, also comprises means for controlling or regulating the incoming traffic. Particularly the node comprises a switching node. Also the, or at least some of the neighbouring nodes, to which the requests are sent, or are intended to be sent, comprise switching nodes. They may however also comprise end user equipment.

Therefore also a method of controlling the outgoing traffic from a node in a telecommunications network is provided. The method includes the steps of; when sending a request to a neighbouring node using a protocol on a signalling channel and detecting if within a given time interval no response is received from the neighbouring node, and then, storing information thereon for a given time period during which no (new) call establishment requests are allowed to be sent to that particular neighbouring node, thus indicating that the node is or is about to become, overloaded. The method includes the building of a table or similar containing up-to-date information about overloaded neighbouring nodes. The table dynamically changes its content depending on absence of responses to requests sent (particularly according to the protocol) to the respective nodes. Particularly a method is provided which includes the steps of first checking the table to see if there recently has been a timeout for a neighbouring node which it is intended to send a call establishment request to and if so, for example sending the request to another neighbouring node (if possible) thus controlling the sending of call establishment request.

Particularly the method includes the steps of establishing if, when any timer expires, i.e. preferably already provided for by the protocol, no response has arrived in due time, adding information thereon to a table or similar, and if intending to send a new call establishment request to the same neighbouring node, examining whether a given time period corresponding to a preset latency time is exceeded, if not, sending the request to another neighbouring node or rejecting the request.

### BRIEF DESCRIPTION OF THE DRAWINGS

The invention will in the following be further described, in a non-limiting way, and with reference to the accompanying drawings in which:
- Fig 1: schematically illustrates two nodes, one of which implements load control according to the invention,
- Fig 2: is a flow diagram which schematically illustrates a method of sending call establishment requests from a node in a telecommunications network, and
- Fig 3: is a simplified flow diagram illustrating the situation when no response is received in time.

### DETAILED DESCRIPTION OF THE INVENTION

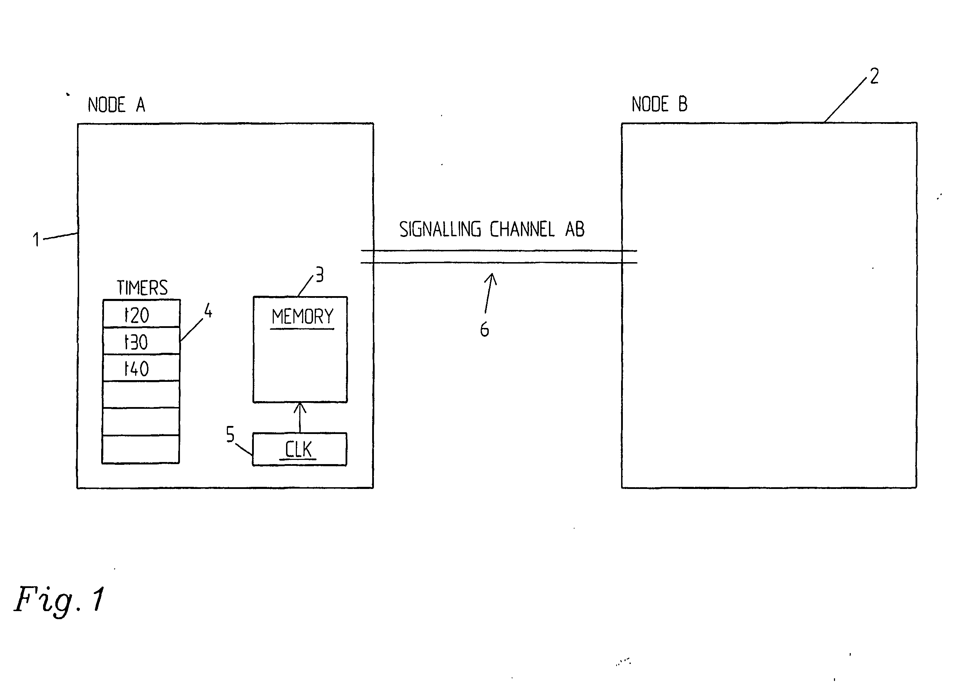

Fig. 1 illustrates a first node A 1 which here is seen as the "origination" node sending requests to a neighbouring node B 2. The requests may originate from node A as well as they may originate from some other node; node A in the latter case acting as an intermediary node. Node A 1 is supposed to contain load controlling means for controlling the outgoing traffic. Node A comprises a signalling entity using a protocol on a signalling channel, here signalling channel AB 6, call establishment/call modification/call release requests are sent. Request Protocol Data Units (PDUs) from node A to node B are time supervised according to the used protocol. Node A is here supposed to be a switching node and B may either be another switching node but it may also be an end user equipment. The protocol may e.g. be the PNNI (Private Network to Network Interface) used for ATM (Asynchronous Transfer Mode) internally within a network controlled by an operator.

Between networks controlled by different operators may e.g. BICI, AINI be used.

It is here supposed that node A uses a signalling channel AB 6 for sending requests to node B. In its private view of the state of signalling channel AB 6, node A introduces and maintains an extra state indicating overload which means that node B is overloaded. Since the signalling etc. between nodes A and B in other aspects is performed in a conventional manner, the signalling channel 6 is here merely schematically indicated as a channel between nodes A and B. In node A 1 detection means (not specifically illustrated) are included to settle whether a request PDU sent to node B is responded to within a given time interval T_{R}. This is implemented through the use of a number of timers 4. Any protocol timer as defined through the used protocols are preferably used in node A, e.g. one for each of a number of neighbours, t20 here meaning a timer used for requests sent to node B. If thus there is a timeout for timer t20, i.e. there is no response received from node B in due time, the time at which there is a timeout is stored into the memory, storing means 3. This means that the clock CLK 5 is copied to the storing means 3. Thereupon no requests relating to the establishment of a new connection are allowed to be sent to node B for a predetermined time period, or a latency time T. Thus, each time node A wants to send a request to node B, is examined whether the actual time at which the new request should be sent is less than the value stored in the storing means plus the latency time T. If yes, signalling channel AB 6 is blocked for requests. If however, the actual time t₂ > t₁, which is the time at which the first request was sent or more accurately when there was a timeout, plus the latency time T, it is again possible to send a call establishment request to node B. Unless node B comprises an end user equipment, also node B advantageously implements load control for outgoing traffic according to the inventive concept. This is however not illustrated in the figure. Node A and node B may also comprise load controlling means for controlling incoming traffic. This is however not of interest for the present invention and therefore such means are not illustrated in the figure. Alternatively only one of the nodes contains such load controlling means.

In an advantageous implementation the concept is implemented in a system containing a plurality of nodes in which at least the switching nodes comprise load controlling means for controlling the outgoing traffic according to invention.

If it is established that node B is overloaded, or about to be overloaded, i.e. a timeout is received as discussed above, node A may investigate if there are any possible alternative routes for the call, i.e. if there are any other neighbouring nodes to which a request can be sent. Then same procedure as above is then repeated for such node. This can however be done in any appropriate manner and the invention introduces no limitation to how is to be proceeded.

Generally, according to the protocol used, a timer is started each time a request is sent to a node, and a previous timer is always superseded by a subsequent timer. It is an advantage of the invention that already existing procedures, i.e. protocol determined, are taken advantage of. Thus, when a request is sent out, a timer is started, which is supervised. This means that it is detected if a response to the response is received in due time, e.g. within 4 seconds. If not, it is prescribed that a further call establishment request be sent out, according to a particular embodiment of the invention such further request is stopped in absence of a response. (According to a protocol is prescribed that after 4 more seconds a call release request is sent out, whereupon it is looked for an alternative channel. That the further request is not stopped is due to the protocol and since it belongs to one and the same call as the preceding request. Only requests relating to a "new" or a subsequent call or connection are stopped, or every first request relating to a new connection.

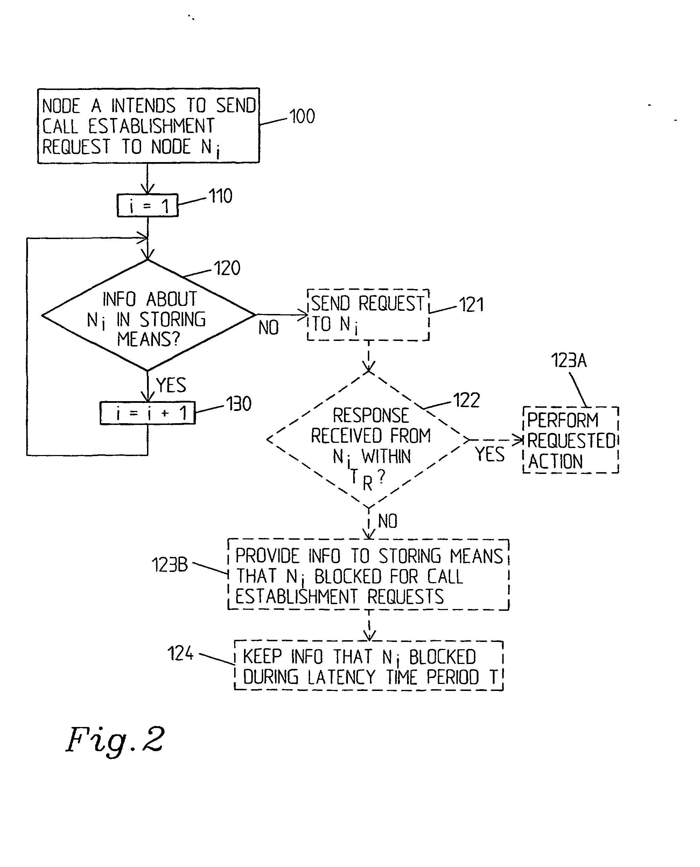

Fig. 2 is a flow diagram illustrating the situation when node A intends to send a request to a neighbouring node. It is supposed that node A wants to send a request to neighbouring node Nᵢ, 100. It is here also supposed that there are some alternative neighbouring nodes indicated through i which means the neighbouring nodes possible as receivers of a request in a given order wherein i = 1, i.e. node N₁ is the first alternative, 110. It is then checked if there is any information about Nᵢ contained in the storing means, 120. If there is information about Nᵢ in the storing means, first N₁, it indicates that N₁ is blocked for requests relating to establishment of a new connection. Then is proceeded with the next alternative neighbouring node, i.e. i is increased by one, 130, and it is checked whether there is any information about N₂ in the storing means etc. If however for a node Nᵢ there is no information in the storing means, the request is sent to such node Nᵢ, 121. Then is detected whether there is a response received from Nᵢ within a predetermined time interval Tᵣ, 122. If a response is received in due time, this indicates that Nᵢ is not overloaded and the requested action is performed in any conventional manner, 123A. If however no response is received from Nᵢ within T_{R}, information thereon is provided to the storing means, 123B. Said information consists in an indication that Nᵢ is blocked for requests (relating to establishment of new connections). Requests relating to release of a connection or a modification are however permitted.

Information in the storing means that Nᵢ is blocked is then kept for a latency time period T, 124, during which no further requests relating to a new connection are allowed. The procedure may then continue as discussed above, 120, 130, for alternative neighbouring nodes if such are available. Otherwise the request may be rejected. This can be done in different manners. Steps 121-124 merely relate to one possible way to proceed and the corresponding boxes are therefore dashed.

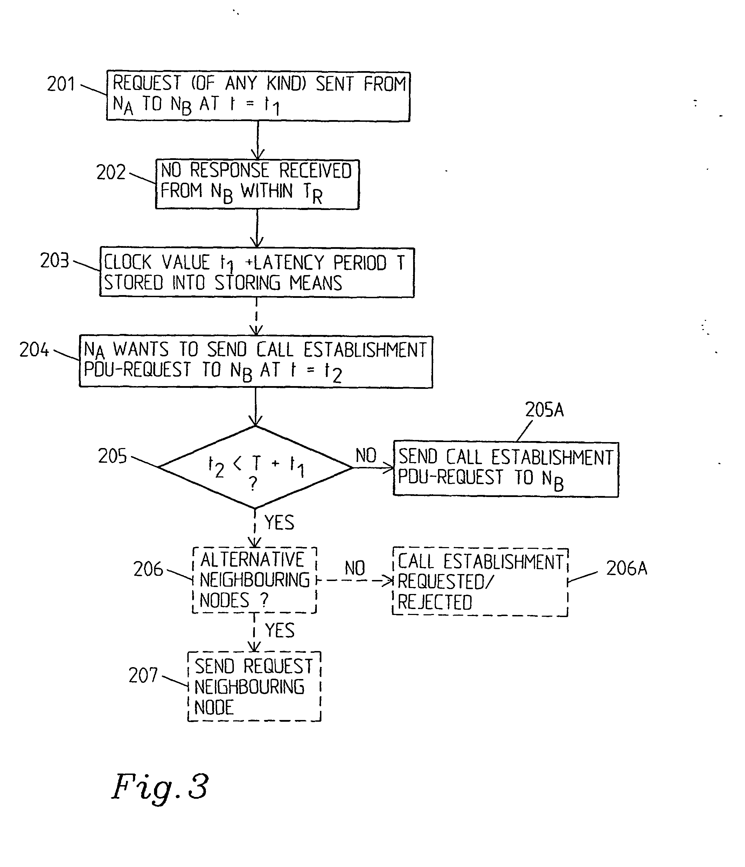

Fig. 3 is a flow diagram illustrating more in detail when a request is sent from node N_{A} to node N_{B} at time t = t₁, 201. It is here supposed that it is established that no response is received from N_{B} within the predetermined time interval T_{R}, 202, in other words there has been a timeout. In this case the procedure when a response is received in due time is not contemplated, since this was already discussed with reference to Fig. 2. The clock value t₁ plus the latency time period T is then stored into storing means, 203. Now the procedure when node N_{A} wants to send a new call establishment PDU request to N_{B} is considered, 204, and it is assumed that this takes place at time t = t₂. It is then examined whether t₂ < T + t₁, 205. If not, this means that it is allowed to send call establishment requests to N_{B}, 205A, and therefore the request is sent to N_{B.} If however it is established that t₂ < T + t₁, it may e.g. be examined whether there are any alternative neighbouring nodes, 206. If yes, such neighbouring nodes are tried one by one, 207. If however there are no alternative neighbouring nodes, the request is rejected. This can however be done in any appropriate manner, and therefore the boxes corresponding to steps 206, 206A, 207 are dashed and these steps merely show an example on how the procedure can be continued after the steps according to the concept of the invention.

The invention is of course also in other ways not limited to the explicitly illustrated embodiments but it can be varied in a number of ways within the scope of the appended claims.

It is an advantage of the invention that this solution is easy to implement and it does require any demanding logic for traffic analyzis and furthermore call modification PDUs and call release PDUs are not stopped together with call establishment PDUs. Furthermore it is possible to reject incoming traffic at an early stage in case of overload conditions prevailing in a node. It is also an advantage that use can be made of features as already prescribed for by the used protocols.

## Claims

1. An arrangement for controlling the flow using load controlling means in a node (1) in a telecommunication system, which node (1) uses a specified protocol for signalling with neighbouring nodes (2),
**characterized in**
**that** the load controlling means are arranged to control outgoing traffic and comprises means for controlling the sending of requests to neighbouring nodes, detection means for detecting whether a response to a request sent to a neighbouring node meets some predefined timing requirements and in that in the absence of such a response from a node (2) fulfilling the timing requirements, no requests relating to a new call establishment are allowed to be sent to such node (2) during a given time period.

2. An arrangement according to claim 1,
the load controlling means comprises (a) timer(s) (4) or uses timers already available through the specified protocol which is/are started whenever a request is sent out and in that the predetermined requirement consists in a given time interval within which a response should be received, which e.g. is specified through the used protocol.

3. An arrangement according to claim 2,
the load controlling means further comprises communication storing means (3) for storing information about neighbouring nodes not having provided a response within the predetermined time interval, thus indicating that the neighbouring node is overloaded, and in that said storing means (3) are arranged to maintain information about said node for a given time period and in that during such time period no call set-up requests are sent to such neighbouring node, only call release and call modification requests being allowed.

4. An arrangement according to claim 2 or 3,
**characterized in**
**that** the storing means (3) comprises a table.

5. An arrangement according to claim 4,
**characterized in**
**that** the table is provided in a primary memory.

6. An arrangement according to claim 4 or 5,
**characterized in**
**that** when a node (1) intends to send a call set-up request to a neighbouring node (2), the controlling means are arranged first examine the storing means (3) to establish whether there is any information about the neighbouring node (2), e.g. if there has been a time out indicating that the node is overloaded, if yes, another node may be selected if available and if not, the call set-up request is sent to the neighbouring node (2).

7. An arrangement according to any one of claims 1-6,
**characterized in**
**that** a request relates to the setting up of a connection (a call set-up), a call release or the adding of a party, only call set-up requests being blocked in case of a node being overloaded.

8. An arrangement according to claim 7,
**characterized in**
**that** at least the sending node (1) is a switching node.

9. An arrangement according to any one of claims 1-8,
**characterized in**
**that** it further comprises means for controlling incoming traffic.

10. A method of controlling the outgoing traffic from a node (1) in a telecommunications network, said method comprising the steps of:
- sending a request to a neighbouring node (1) using a specified protocol on a signalling channel (6),
- detecting if within a given time interval a response is received from the neighbouring node (2), if not,
- storing information thereon for a given time period during which no requests relating to another call establishment are sent to that neighbouring node (2), thus building a table or similar containing up-to-date information about overloaded neighbouring nodes.

11. A method according to claim 10,
**characterized in**
**that** it comprises the steps of:
- observing one or more timers (4) set when a request is sent out to a neighbouring node (2),
- if no response arrives before expiry of the timer (4), adding information thereon to the table, list or similar;
- if intending to send a request relating to call establishment to the same neighbouring node (2), examining if a given time period corresponding to a latency time is exceeded, if not, e.g. sending the request to another neighbouring node if possible, otherwise rejecting the call establishment request.

## Patentansprüche

1. Anordnung zum Steuern des Flusses unter Verwendung von Laststeuereinrichtungen in einem Knoten (1) in einem Telekommunikationssystem, wobei der Knoten (1) ein spezifiziertes Protokoll zum Signalisieren mit benachbarten Knoten (2) verwendet,
**dadurch gekennzeichnet, dass**
die Laststeuereinrichtungen angeordnet sind, ausgehenden Verkehr zu steuern und eine Einrichtung zum Steuern des Sendens von Abfragen an benachbarte Knoten, eine Erfassungseinrichtung zum Erfassen, ob eine Antwort auf eine Abfrage, die zu einem benachbarten Knoten gesendet ist, bestimmte vordefinierte Zeitgebungsanforderungen erfüllt, umfassen, und dass es bei der Abwesenheit einer derartigen Antwort von einem Knoten (2), die die Zeitgebungsanforderungen erfüllt, nicht zugelassen ist, dass Abfragen, die eine neue Anrufeinrichtung betreffen, zu einem derartigen Knoten (2) während einer gegebenen Zeitperiode gesendet werden.

2. Anordnung nach Anspruch 1,
wobei die Laststeuereinrichtung (a) (einen) Zeitgeber (4) umfasst oder Zeitgeber verwendet, die bereits durch ein spezifiziertes Protokoll verfügbar sind, der/die gestartet werden, wann immer eine Abfrage ausgesendet wird, und dass die vorbestimmte Anforderung aus einem gegebenen Zeitintervall besteht, innerhalb welchem eine Antwort empfangen werden sollte, die z.B. durch das verwendete Protokoll spezifiziert ist.

3. Anordnung nach Anspruch 2,
wobei die Laststeuereinrichtung weiter Kommunikationsspeichereinrichtungen (3) zum Speichern einer Information über benachbarte Knoten umfasst, die eine Antwort innerhalb des vorbestimmten Zeitintervalls nicht bereitgestellt haben, womit angezeigt wird, dass der benachbarte Knoten überlastet ist, und dass die Speichereinrichtungen (3) angeordnet sind, eine Information über den Knoten für eine gegebene Zeitperiode zu halten, und dass während einer derartigen Zeitperiode keine Anrufaufbauabfragen zu einem derarigen benachbarten Knoten gesendet werden, wobei nur Anruffreigabe- und Anrufmodifikationsabfragen zugelassen sind.

4. Anordnung nach Anspruch 2 oder 3,
**dadurch gekennzeichnet**,
die Speichereinrichtung (3) eine Tabelle umfasst.

5. Anordnung nach Anspruch 4,
**dadurch gekennzeichnet**,
die Tabelle in einem primären Speicher bereitgestellt ist.

6. Anordnung nach Anspruch 4 oder 5,
**dadurch gekennzeichnet,**
**dass** dann, wenn ein Knoten (1) beabsichtigt, eine Anrufaufbauabfrage zu einem benachbarten Knoten (2) zu senden, die Steuereinrichtungen angeordnet sind, zuerst die Speichereinrichtungen (3) zu untersuchen, um zu bestimmen, ob irgendeine Information über den benachbarten Knoten (2) vorhanden ist, z.B. ob ein Zeitablauf vorhanden gewesen ist, der anzeigt, dass der Knoten überlastet ist, falls ja, ein anderer Knoten ausgewählt werden kann, falls verfügbar, und falls nicht, die Anrufabfrageanforderung zu dem benachbarten Knoten (2) gesendet wird.

7. Anordnung nach einem der Ansprüche 1-6,
**dadurch gekennzeichnet,**
**dass** eine Abfrage den Aufbau einer Verbindung (einen Anrufaufbau), eine Anruffreigabe oder das Hinzufügen einer Partei betrifft, wobei Anrufaufbauabfragen nur in dem Fall blockiert werden, dass ein Knoten überlastet ist.

8. Anordnung nach Anspruch 7,
**dadurch gekennzeichnet,**
**dass** zumindest der Sendeknoten (1) ein Vermittlungsknoten ist.

9. Anordnung nach einem der Ansprüche 1-8,
**dadurch gekennzeichnet,**
**dass** sie weiter eine Einrichtung zum Steuern eines eingehenden Verkehrs umfasst.

10. Verfahren zum Steuern des von einem Knoten (1) in einem Telekommunikationsnetz ausgehenden Verkehrs, wobei das Verfahren die Schritte umfasst:
- Senden einer Anfrage zu einem benachbarten Knoten (1) unter Verwendung eines spezifizierten Protokolls auf einem Signalisierungskanal (6),
- Erfassen, ob innerhalb eines vorgegebenen Zeitintervalls eine Antwort von dem benachbarten Knoten (2) empfangen wird, falls nicht,
- Speichern einer Information davon für eine gegebene Zeitperiode, während welcher keine Abfragen, die eine andere Anrufeinrichtung betreffen, zu diesem benachbarten Knoten (2) gesendet werden, womit eine Tabelle oder dergleichen, die eine aktualisierte Information über belastete benachbarte Knoten enthält, aufgebaut wird.

11. Verfahren nach Anspruch 10,
**dadurch gekennzeichnet,**
**dass** es die Schritte umfasst:
- Beobachten eines oder mehrerer Zeitgeber (4), die gesetzt werden, wenn eine Abfrage zu einem benachbarten Knoten (2) ausgesendet wird,
- falls keine Antwort vor dem Ablauf des Zeitgebers (4) ankommt, Hinzufügen einer Information davon zu der Tabelle, Liste oder dergleichen;
- wenn beabsichtigt wird, eine Abfrage, die eine Anrufeinrichtung betrifft, zu dem gleichen benachbarten Knoten (2) zu senden, Überprüfen, ob eine gegebene Zeitperiode, die einer Latenzzeit entspricht, überschritten ist, falls nicht, z.B. Senden der Abfrage zu einem anderen benachbarten Knoten, falls möglich, andernfalls Zurückweisen der Anrufeinrichtungsabfrage.

## Revendications

1. Agencement pour contrôler le flux à l'aide de moyens de contrôle de charge dans un noeud (1) dans un système de télécommunications, ce noeud (1) utilisant un protocole spécifié pour la signalisation avec des noeuds voisins (2),
**caractérisé en ce que** :
les moyens de contrôle de charge sont agencés de façon à contrôler le trafic sortant, et comprennent des moyens pour contrôler l'envoi de demandes à des noeuds voisins, des moyens de détection pour détecter si une réponse à une demande envoyée à un noeud voisin satisfait à certaines exigences de minutage prédéfinies, et **en ce que**, en l'absence d'une telle réponse à partir d'un noeud (2) satisfaisant aux exigences de minutage, aucune demande concernant un nouvel établissement d'appel n'est autorisée à être envoyée à ce noeud (2) durant une période de temps donnée.

2. Agencement selon la revendication 1,
les moyens de contrôle de charge comprenant (a) un ou plusieurs minuteur(s) (4), ou utilisant des minuteurs déjà disponibles à l'aide du protocole spécifié, qui est/sont démarré(s) à chaque fois qu'une demande est envoyée, et **caractérisé en ce que** l'exigence prédéterminée consiste en un intervalle de temps donné à l'intérieur duquel une réponse devrait être reçue, celui-ci étant, par exemple, spécifié à l'aide du protocole utilisé.

3. Agencement selon la revendication 2,
les moyens de contrôle de charge comprenant de plus des moyens de mémorisation de communication (3) pour mémoriser une information concernant des noeuds voisins n'ayant pas délivré une réponse à l'intérieur de l'intervalle de temps prédéterminé, indiquant par conséquent que le noeud voisin est surchargé, et **caractérisé en ce que** lesdits moyens de mémorisation (3) sont configurés de façon à maintenir l'information concernant ledit noeud pendant une période de temps donnée, et **en ce que**, pendant cette période de temps, aucune demande d'établissement d'appel n'est envoyée à ce noeud voisin, seules des demandes de libération d'appel et de modification d'appel étant autorisées.

4. Agencement selon la revendication 2 ou 3,
**caractérisé en ce que** :
les moyens de mémorisation (3) comprennent une table.

5. Agencement selon la revendication 4,
**caractérisé en ce que** :
la table est disposée dans une mémoire primaire.

6. Agencement selon la revendication 4 ou 5,
**caractérisé en ce que** :
lorsqu'un noeud (1) tente d'envoyer une demande d'établissement d'appel à un noeud voisin (2), les moyens de contrôle sont agencés de façon à examiner tout d'abord les moyens de mémorisation (3) afin d'établir s'il existe une quelconque information concernant le noeud voisin (2), à savoir, par exemple, s'il y a eu un dépassement de minutage indiquant que le noeud est surchargé, et, si c'est le cas, un autre noeud peut être sélectionné, si celui-ci est disponible, et, si ce n'est pas le cas, la demande d'établissement d'appel est envoyée au noeud voisin (2).

7. Agencement selon l'une quelconque des revendications 1 à 6,
**caractérisé en ce que** :
une demande concerne l'établissement d'une connexion (un établissement d'appel), une libération d'appel ou l'addition d'une partie, seules les demandes d'établissement d'appel étant bloquées dans le cas où un noeud est surchargé.

8. Agencement selon la revendication 7,
**caractérisé en ce que** :
au moins le noeud d'envoi (1) est un noeud de commutation.

9. Agencement selon l'une quelconque des revendications 1 à 8,
**caractérisé en ce que** :
il comprend de plus des moyens pour contrôler le trafic entrant.

10. Procédé de contrôle du trafic sortant à partir d'un noeud (1) dans un réseau de télécommunications, ledit procédé comprenant les étapes consistant à :
- envoyer une demande à un noeud voisin (1) à l'aide d'un protocole spécifié sur un canal de signalisation (6),
- détecter si, à l'intérieur d'un intervalle de temps donné, une réponse est reçue à partir du noeud voisin (2), et, si ce n'est pas le cas,
- mémoriser une information sur celui-ci pour une période de temps donnée pendant laquelle aucune demande concernant un autre établissement d'appel n'est envoyée à ce noeud voisin (2), de façon à constituer ainsi une table, ou similaire, contenant une information à jour concernant les noeuds voisins surchargés.

11. Procédé selon la revendication 10,
**caractérisé en ce qu'**il comprend les étapes consistant à :
- observer un ou plusieurs minuteur(s) (4) établis lorsqu'une demande est envoyée à un noeud voisin (2),
- si aucune réponse n'arrive avant l'expiration du minuteur (4), ajouter l'information sur celui-ci à la table, à la liste, ou similaire ;
- si l'on tente d'envoyer une demande concernant un établissement d'appel au même noeud voisin (2), examiner si une période de temps donnée correspondant à un temps de latence est dépassée, et, si ce n'est pas le cas, envoyer par exemple la demande à un autre noeud voisin, si cela est possible, ou, sinon, rejeter la demande d'établissement d'appel.
